# EUROPÄISCHE PATENTSCHRIFT

(11) **EP 2 297 484 B1**
(45) Veröffentlichungstag und Bekanntmachung des Hinweises auf die Patenterteilung: **01.02.2012**
(21) Anmeldenummer: 09769086.1
(22) Anmeldetag: 25.05.2009
(51) Int. Cl.: F16H 55/17, F16H 55/22, F16H 57/02, F16H 1/06

(54) **GETRIEBE SOWIE GETRIEBE-ANTRIEBSEINHEIT**
TRANSMISSION AND TRANSMISSION DRIVE UNIT
MÉCANISME AINSI QU UNITÉ D ENTRAÎNEMENT ET DE TRANSMISSION

(30) Priorität: 30.10.2008 DE 102008043304; 27.06.2008 DE 102008002728
(43) Veröffentlichungstag der Anmeldung: 23.03.2011
(73) Patentinhaber: Robert Bosch GmbH, 70442 Stuttgart (DE)
(72) Erfinder: MILI, Tarek, 76133 Karlsruhe (DE); KRAUTH, Marco, 76547 Sinzheim (DE); ANDING, Lars-Dirk, 72202 Nagold (DE)
(86) Internationale Anmeldenummer: PCT/EP2009/056263
(87) Internationale Veröffentlichungsnummer: WO 2009/156237

(56) Entgegenhaltungen:
- DE-U1- 8 903 713
- FR-E- 40 204
- US-A1- 2002 011 127
- US-A1- 2003 084 740

## Beschreibung

### Stand der Technik

Die Erfindung betrifft ein Getriebe, insbesondere ein Verstellgetriebe für Kraftfahrzeuganwendungen gemäß dem Oberbegriff des Anspruchs 1 sowie eine Antriebs-Getriebeeinheit gemäß Anspruch 12.

FR 40204 offenbart ein gattungsgemäßes Getriebe.

Bekannte Getriebe für Fahrzeugsitzverstelleinrichtungen umfassen üblicherweise ein Abtriebszahnrad, bestehend aus einem mit einer Getriebeschnecke kämmenden Schneckenrad und einem drehmomentübertragend mit dem Schneckenrad zusammenwirkenden Mitnehmerrad. Das Mitnehmerrad durchragt dabei üblicherweise eine Gehäuseöffnung eines Getriebegehäuses in axialer Richtung. Das Getriebegehäuse von bekannten Getrieben besteht üblicherweise aus einem wannenartigen Gehäusegrundkörper und einem die Gehäuseöffnung aufweisenden, am Gehäusegrundkörper, beispielsweise durch Verschrauben, Verrasten oder Ultraschallschweißen, festlegbaren Gehäusedeckel. Die bekannten Getriebe haben sich bewährt. Doch bestehen Bestrebungen, die benötigte Bauteilanzahl zu minimieren und den Aufbau des Getriebes zu vereinfachen.

### Offenbarung der Erfindung

### Technische Aufgabe

Der Erfindung liegt daher die Aufgabe zugrunde, ein hinsichtlich seines Aufbaus vereinfachtes Getriebe, vorzugsweise mit einer minimierten Bauteilzahl, vorzuschlagen. Ferner besteht die Aufgabe darin, eine Antriebs-Getriebeeinheit, umfassend ein entsprechend optimiertes Getriebe vorzuschlagen.

### Technische Lösung

Diese Aufgabe wird hinsichtlich des Getriebes mit den Merkmalen des Anspruchs 1 und hinsichtlich der Antriebs-Getriebeeinheit mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, dem mindestens einen Getrieberad des Getriebes zusätzlich zu seiner Drehmomentübertragungsfunktion eine Getriebedeckelfunktion zuzuweisen. Anders ausgedrückt bildet das Getrieberad einen, den, insbesondere wannenförmigen, Gehäusegrundkörper verschließenden Gehäusedeckel. Noch anders ausgedrückt bildet das Getrieberad, vorzugsweise mit dem größten Teil seiner Flächenerstreckung, einen Bestandteil des Getriebegehäuses. Besonders bevorzugt ist dabei eine Ausführungsform, bei der auf einen zusätzlichen, von dem Getrieberad separaten, Getriebedeckel zum Verschließen des Gehäusegrundkörpers verzichtet wird. Ein nach dem Konzept der Erfindung ausgebildetes Getriebe ist aufgrund der Doppelfunktion des Getrieberades, insbesondere dann, wenn auf einen separaten Getriebedeckel vollständig verzichtet wird, von einem einfacheren Aufbau als bekannte Getriebe, bei denen ein von dem Getrieberad separater Getriebedeckel in axialer Richtung von dem Getrieberad, insbesondere von einem Abtriebsabschnitt des Getrieberades, durchsetzt ist. Darüber hinaus ist die Bauteilzahl bei Verzicht auf einen separaten Getriebedeckel minimal. Im Vergleich zum Stand der Technik kann der Fertigungsschritt des Ultraschallverschweißens eines Getriebedeckels mit dem Gehäusegrundkörper mit Vorteil entfallen. Ein nach dem Konzept der Erfindung ausgebildetes Getriebe eignet sich insbesondere für den Einsatz in Kraftfahrzeugen, beispielsweise in einem Fensterheberantrieb, einem Sitzverstellantrieb oder einem Schiebedachantrieb.

In Weiterbildung der Erfindung ist mit Vorteil vorgesehen, dass das Getrieberad mit mehr als 50 % seiner Flächenerstreckung, vorzugsweise mit mehr als 60 %, bevorzugt mit mehr als 70 %, besonders bevorzugt mit mehr als 80 %, ganz besonders bevorzugt mit mehr als 90 % seiner Flächenerstreckung eine Gehäuseaußenseite bildet, also nicht von einem von dem Getrieberad separaten Bauteil auf der Außenseite des Getrieberades überdeckt ist.

Besonders bevorzugt ist eine Ausführungsform des Getriebes, bei der das Getrieberad gegenüber dem Gehäusegrundkörper, vorzugsweise gegenüber einer Umfangswand des Gehäusegrundkörpers abgedichtet ist. Zusätzlich oder alternativ ist es bevorzugt, wenn das Getrieberad gegenüber einem inneren Führungselement des Getrieberades, das Bestandteil des Gehäusegrundkörpers sein kann oder an diesem festlegbar sein kann, abgedichtet ist. Durch die Abdichtung des Getrieberades bzw. eines Umfangsspaltes zwischen dem Getrieberad und dem Gehäusegrundkörper und/oder zwischen dem Getrieberad und dem Führungselement wird ein Feuchtigkeitseintritt in das Innere des von dem Getrieberad begrenzten Getriebegehäuses sicher verhindert.

Besonders bevorzugt ist eine Ausführungsform, bei der zur Abdichtung des Getrieberades gegenüber dem Gehäusegrundkörper und/oder gegenüber dem Führungselement eine Ringdichtung eingesetzt wird, die sich axial und/oder radial zwischen dem Gehäusegrundkörper und dem Getrieberad bzw. axial und/oder radial zwischen dem Getrieberad und dem inneren Führungselement befindet.

Dabei ist eine Ausführungsform realisierbar, bei der die Ringdichtung als von dem Getrieberad und/oder dem Gehäusegrundkörper bzw. dem Führungselement separates Bauteil ausgebildet ist, wobei in diesem Fall bevorzugt an zumindest einem der vorgenannten Bauelemente eine entsprechende Aufnahmekontur, insbesondere eine Nutkontur, zur Aufnahme der Ringdichtung, vorgesehen ist. Besonders bevorzugt ist eine Ausführungsform, bei der die Ringdichtung ein Bestandteil des Getrieberades und/oder des Gehäusegrundkörpers und/oder des Führungselementes ist. Beispielsweise kann die Ringdichtung hierzu an das entsprechende Bauelement angespritzt, also einteilig mit diesem ausgebildet werden. Dies bietet wirtschaftliche Vorteile durch eine weitere Reduzierung von Bauteilen, Logistikaufwand und Qualitätssicherungsaufwand.

Da das Getrieberad einen Gehäusedeckel bildet, muss das Getrieberad eine definierte Position zum Gehäusegrundkörper einnehmen. Um die Einhaltung dieser definierten Relativposition zu gewährleisten, ist in Weiterbildung der Erfindung mindestens ein die axiale Position des Getrieberades relativ zu dem Gehäusegrundkörper sicherndes Axialsicherungselement vorgesehen. Dieses kann einteilig mit dem Gehäusegrundkörper und/oder dem inneren Führungselement für das Getrieberad ausgebildet sein. Alternativ ist es möglich, zumindest ein Axialsicherungselement als von dem Gehäusegrundkörper und/oder dem Führungselement separates Bauteil auszubilden, das bevorzugt nach der Montage des Getrieberades im Gehäusegrundkörper mit dem Gehäusegrundkörper oder dem Führungselement verrastet wird. Dabei übergreift bevorzugt das Axialsicherungselement einen Rand des Getrieberades in radialer Richtung.

Insbesondere dann, wenn das Axialsicherungselement als von dem Gehäusegrundkörper separates Bauteil ausgebildet ist, ist eine Ausführungsform bevorzugt, bei der das Axialsicherungselement als Ringbauteil ausgeformt ist. Alternativ ist es möglich, mehrere, vorzugsweise in Umfangsrichtung beabstandete Rastelemente als Axialsicherungselemente vorzusehen, wobei es in diesem Fall besonders bevorzugt ist, wenn diese Rastelemente einstückig mit dem Gehäusegrundkörper ausgebildet sind.

Im Hinblick auf die Ausbildung des, insbesondere dom- bzw. stabförmigen, Führungselementes gibt es unterschiedliche Möglichkeiten. So ist es beispielsweise realisierbar, das Führungselement einteilig mit dem Gehäusegrundkörper, insbesondere als Führungsdom auszubilden. Besonders bevorzugt ist jedoch eine Ausführungsform, bei der das Führungselement als von dem Gehäusegrundkörper separates Bauteil ausgebildet ist, das vorzugsweise nach der Montage des Getrieberades, eine zentrische Öffnung des Getrieberades durchsetzend an dem Gehäusegrundkörper festgelegt wird.

In Weiterbildung der Erfindung ist mit Vorteil vorgesehen, dass das den Gehäusedeckel bildende Getrieberad ein Abtriebszahnrad (Abtriebselement) ist. Im Hinblick auf die Ausbildung eines derartigen Abtriebszahnrades gibt es unterschiedliche Möglichkeiten. So ist eine Ausführungsform realisierbar, bei der das Abtriebszahnrad aus einem Schneckenrad besteht, in das in axialer Richtung ein Mitnehmerrad eingreift, wobei es besonders bevorzugt ist, zwischen dem Mitnehmerrad und dem Schneckenrad mindestens ein Dämpfungselement vorzusehen. Dabei ist eine Ausführungsform von besonderem Vorteil, bei der das den Gehäusedeckel bildende Getrieberad von dem Mitnehmerrad gebildet ist. Alternativ ist eine Ausführungsform realisierbar, bei der das Abtriebszahnrad (Abtriebselement) einteilig, insbesondere als Verbundbauteil ausgebildet ist. Dabei befindet sich bevorzugt zwischen einem radial äußeren Schneckenradabschnitt und einem radial inneren Abtriebsabschnitt eine Elastomermasse, beispielsweise Kautschuk. Beispielsweise kann das Abtriebsrad als Kunststoff-Kautschuk-Verbund ausgebildet werden, wobei es in diesem Fall besonders bevorzugt ist, die Ringdichtung zur Abdichtung des Getrieberades gegenüber dem Gehäusegrundkörper außen an das einteilige Abtriebszahnrad anzuspritzen.

Bei Fensterverstellantrieben gibt es sogenannte Nassraumanwendungen und Trockenraumanwendungen. Bei Nassraumanwendungen befindet sich das Getriebe zusammen mit einem Seilzugsystem zur Verstellung der Scheibe in einem Nassraum einer Kraftfahrzeugtür, wohingegen bei Trockenraumanwendungen das Getriebe in einem Trockenraum angeordnet ist, der über eine Trennwand von dem Nassraum getrennt ist. Durch eine in der Trennwand vorgesehene Öffnung hindurch wirkt das Getriebe mit dem Seilzugsystem zusammen. Für Trockenraumanwendungen ist eine Ausführungsform des Getriebes besonders bevorzugt, bei der dieses eine Ringdichtung aufweist, die in Richtung der Trennwand erhaben ist und in montierten Zustand an dieser anliegt und somit den Trockenraum gegenüber dem Nassraum abdichtet. Im Hinblick auf die Anordnung der Ringdichtung am Getriebe gibt es unterschiedliche Möglichkeiten. So ist es denkbar, die Ringdichtung einstückig mit dem sich drehenden Getrieberad auszubilden oder an diesem festzulegen, insbesondere festzuklipsen. Alternativ ist gemäß einer bevorzugten Ausführungsform vorgesehen, die Ringdichtung am Gehäusegrundkörper festzulegen, insbesondere festzuklipsen oder einstückig mit diesem auszubilden.

Die Erfindung führt auch auf eine Antriebs-Getriebeeinheit mit einem zuvor beschriebenen Getriebe, das von einem elektrischen Antriebsmotor angetrieben ist. Bevorzugt ist der Antriebsmotor in einem Polgehäuse angeordnet, das an das Getriebegehäuse des Getriebes angeflanscht ist. Insbesondere dann, wenn auf einen von dem Getrieberad separaten Getriebedeckel verzichtet wird, wird eine besonders einfach aufgebaute Antriebs-Getriebeeinheit bereitgestellt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: in einer unvollständigen perspektivischen Darstellung einen Ausschnitt eines Getriebes für einen Fensterverstellantrieb in einem Kraftfahrzeug,
- Fig. 2: ein mögliches Detail aus Fig. 1, das ein von einem Gehäusegrundkörper separates, inneres Führungselement zeigt,
- Fig. 3a bis Fig. 3d: mögliche alternative Ausgestaltungsformen des Dichtbereichs zwischen dem einen Gehäusedeckel bildenden Getrieberad und einem Gehäusegrundkörper und
- Fig. 4: eine alternative Ausführungsform eines Getriebes in einer geschnittenen Darstellung.

### Ausführungsformen der Erfindung

In den Figuren sind gleiche Bauteile und Bauteile mit der gleichen Funktion mit den gleichen Bezugszeichen gekennzeichnet.

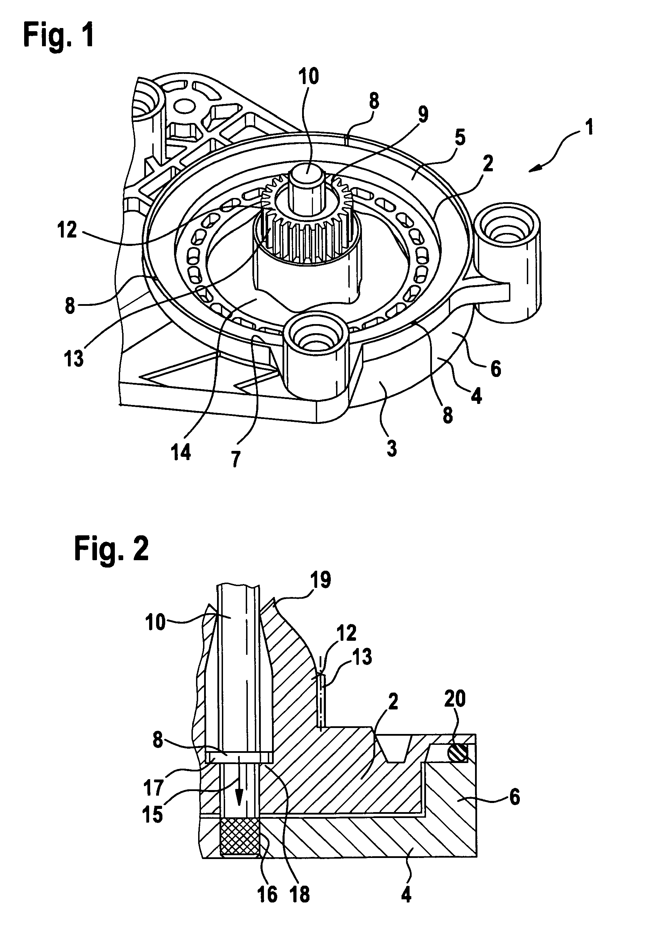

In Fig. 1 ist ausschnittsweise ein Getriebe 1 zum Verstellen eines nicht gezeigten Bauteils in einem Kraftfahrzeug gezeigt. Das Getriebe 1 umfasst ein als einteiliges Abtriebszahnrad (Abtriebselement) ausgebildetes Getrieberad 2, das von einer nicht gezeigten, elektromotorisch angetriebenen Getriebeschnecke an seinem Außenumfang angetrieben ist.

Das Getriebe 1 umfasst ein Getriebegehäuse 3 mit einem wannenartigen Gehäusegrundkörper 4, der vollständig von dem Getrieberad 2 verschlossen ist. Anders ausgedrückt bildet das Getrieberad 2 einen Getriebedeckel 5 für den Gehäusegrundkörper 4.

Radial außen wird das Getrieberad 2 umschlossen von einer umlaufenden Umfangswand 6 des Gehäusegrundkörpers 4, die im Wesentlichen senkrecht zu einem in Fig. 1 nicht zu erkennenden Boden des Gehäusegrundkörpers 4 orientiert ist. An der freien Stirnseite der Umfangswand 6, also am äußeren Rand einer in dem Gehäusegrundkörper 4 gebildeten Aufnahme 7 für das Getrieberad 2, sind drei gleichmäßig in Umfangsrichtung verteilt angeordnete Axialsicherungselemente 8 angeformt, die den radial äußeren Rand des Getrieberades 2 nach radial innen übergreifen und somit die Relativposition des Getrieberades 2 zum Gehäusegrundkörper 4 sichern. Wie sich aus Fig. 1 ergibt, bildet das Getrieberad 2 mit weit über 90 % seiner Flächenerstreckung eine Außenseite des Getriebegehäuses 3 des Getriebes 1.

Wie sich weiter aus Fig. 1 ergibt, weist das Getrieberad 2 eine zentrische Durchgangsöffnung 9 auf, die in axialer Richtung von einem bolzenförmigen Führungselement 10 durchsetzt ist. Das Getrieberad 2 ist sowohl in radialer Richtung nach innen gegenüber dem feststehenden Führungselement 10 als auch in radialer Richtung nach außen gegenüber der feststehenden Umfangswand 6 des Gehäusegrundkörpers 4 mit Hilfe von in Fig. 1 nicht gezeigten Ringdichtungen abgedichtet, sodass ein Eindringen von Feuchtigkeit in einen Bereich zwischen dem Getrieberad 2 und dem nicht gezeigten Boden des Gehäusegrundkörpers 4 sicher verhindert wird. Das Führungselement 10 dient als Lagerstelle für das Getrieberad 2.

Wie sich weiter aus Fig. 1 ergibt, besteht das Getrieberad 2 aus einem zentrischen Nabenabschnitt 12, an dessen Außenumfang eine Abtriebsverzahnung 13 angebracht ist. Die nicht gezeigte, mit dem Schneckenrad zusammenwirkende Außenverzahnung (Umfangsverzahnung) des Getrieberades 2 ist in dem gezeigten Ausführungsbeispiel von der Umfangswand 6 verdeckt und ist sowohl axial als auch radial versetzt zur Abtriebsverzahnung 13 lokalisiert. In einen Bereich zwischen dieser äußeren nicht gezeigten Verzahnung und der Abtriebsverzahnung 13 ist ein Elastomerabschnitt 14 vorgesehen, der für eine ausreichende Torsionsdämpfung des Getrieberades 2 in Umfangsrichtung sorgt.

Aus Fig. 2 ist eine mögliche Anordnung des Führungselementes 10 gezeigt. Zu erkennen ist, dass das Führungselement 10 als von dem Gehäusegrundkörper 4 separates Bauteil ausgebildet ist, das in Pfeilrichtung 15 in eine entsprechende Aufnahmeöffnung 16 im Gehäusegrundkörper 4 einführbar ist. An dem bolzenförmigen Führungselement 10 ist ein Umfangsbund 17 angeformt, der ein Axialsicherungselement 8 für das Getrieberad 2 bildet. Dieses innere Axialsicherungselement 8 kann zusätzlich oder alternativ zu am Außenumfang des Getrieberades 2 wirkenden, beispielhaft in Fig. 1 gezeigten Axialsicherungselementen 8 vorgesehen werden. Der Umfangsbund 17 des Führungselementes 10 liegt in axialer Richtung auf einer am Innenumfang des Getrieberades 2 vorgesehenen, umlaufenden Schulter 18 auf.

Mit Axialabstand zu dem Umfangsbund 17 liegt ein elastischer, nach radial innen ragender Abschnitt 19 des Getrieberades 2 dichtend an dem Führungselement 10 an. Es ist auch eine Ausführungsform realisierbar, bei der der nach radial innen ragende Abschnitt in eine Umfangsnut im Führungselement 10 eingreift. Alternativ kann auch eine separate Ringdichtung radial zwischen dem Führungselement 10 und dem Getrieberad 2 vorgesehen werden. Durch die elastische Ausbildung des Abschnittes 19 wird gewährleistet, dass dieser sich beim Einschieben des Führungselementes 10 in die gezeigte Montageposition nach radial außen aufweitet und somit das Durchschieben des Umfangsbundes 17 ermöglicht.

Wie sich weiter aus Fig. 2 ergibt, ist axial zwischen der Stirnseite der Umfangswand 6 des Gehäusegrundkörpers 4 und einem radial äußeren Abschnitt des Getrieberades 2 eine als O-Ringdichtung ausgebildete Ringdichtung 20 angeordnet, relativ zu der sich das Getrieberad 2 in Umfangsrichtung bewegt.

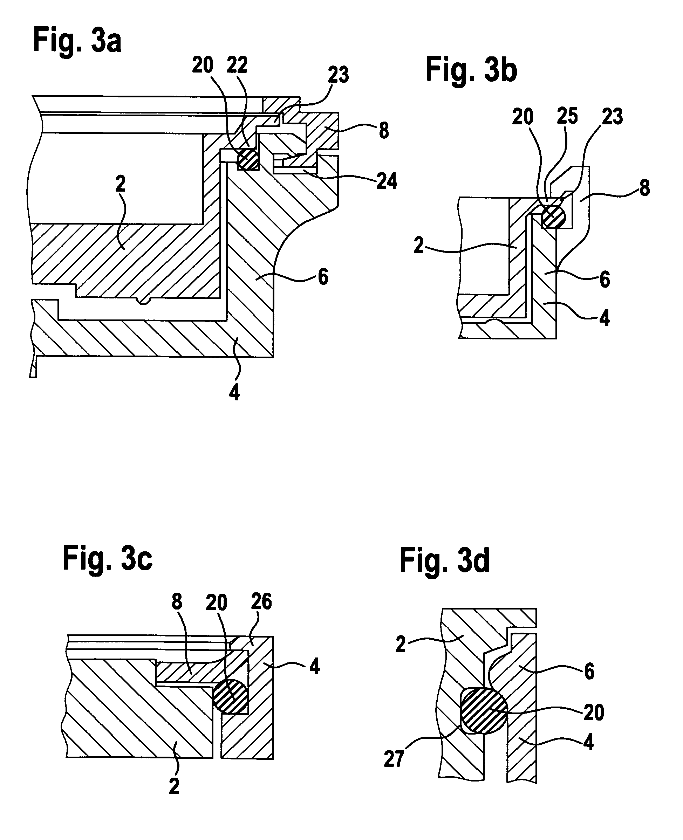

Im Folgenden werden anhand der Fig. 3a bis 3d alternative Realisierungsmöglichkeiten einer ausreichenden Abdichtung des Getrieberades gegenüber dem Gehäusegrundkörper 4 erläutert.

Bei dem Ausführungsbeispiel gemäß Fig. 3a ist eine als O-Ringdichtung ausgebildete Ringdichtung 20 in einer stirnseitigen Umfangsnut in der Umfangswand 6 des Gehäusegrundkörpers 4 aufgenommen. Die Ringdichtung 20 befindet sich sowohl in radialer Richtung als auch in axialer Richtung zwischen dem Getrieberad 2 und dem Gehäusegrundkörper 4. Zu erkennen ist, dass am Getrieberad 2 eine äußere Stufung 22 angeformt ist, mit der das Getrieberad 2 dichtend an der Ringdichtung 20 anliegt.

Wie sich aus Fig. 3a ergibt, wird der radial äußere Rand 23 des Getrieberades 2 in radialer Richtung nach innen übergriffen von einem äußeren Axialsicherungselement 8. Dieses in der Schnittdarstellung gezeigte Bauteil kann beispielsweise als umlaufendes ringförmiges Bauteil ausgebildet werden. Alternativ ist es denkbar, mehrere derartiger, einklipsbarer Axialsicherungselemente 8 in Umfangsrichtung um das Getrieberad 2 verteilt anzuordnen. Bei dem in Fig. 3a gezeigten Axialsicherungselement 8 handelt es sich um ein Rastelement, das in eine Rastausnehmung 24 des Gehäusegrundkörpers 4 eingreift und die das Getrieberad 2 gegen axiale Entnahme sichert.

In Fig. 3b ist ein alternatives Ausführungsbeispiel gezeigt. Hier ist das Axialsicherungselement 8 im Gegensatz zu dem Ausführungsbeispiel gemäß Fig. 3a als integraler Bestandteil des Gehäusegrundkörpers 4 ausgebildet. Genauer handelt es sich um eine das Getrieberad 2 in axialer Richtung übergreifende Rastnase, die den radial äußeren Rand 23 des Getrieberades 2 in radialer Richtung nach innen übergreift. Zu erkennen ist, dass eine als O-Ringdichtung ausgebildete Ringdichtung 20 zum einen axial an einer Stirnseite der Umfangswand 6 des Gehäusegrundkörpers 4 und zum anderen an einer axialen Unterseite einer randseitig gebildeten Ringschulter 25 des Getrieberades 2 anliegt.

Bei dem Ausführungsbeispiel gemäß Fig. 3c ist analog zu dem Ausführungsbeispiel gemäß Fig. 3a ein von dem Gehäusegrundkörper 4 separates Axialsicherungselement 8 vorgesehen, welches jedoch deutlich einfacher konturiert ist als bei dem Ausführungsbeispiel gemäß Fig. 3a. Bei dem Axialsicherungselement 8 gemäß Fig. 3c handelt es sich um ein Ringbauteil, welches an gleichmäßig in Umfangsrichtung verteilt angeordneten Positionen von am Gehäusegrundkörper 4 ausgebildeten Rastnasen 26 in radialer Richtung nach innen übergriffen wird. Die als O-Ringdichtung ausgebildete Ringdichtung 20 befindet sich in einem Bereich radial zwischen dem Getrieberad 2 und dem Gehäusegrundkörper 4.

Bei dem Ausführungsbeispiel gemäß Fig. 3d ist die als O-Ringdichtung ausgebildete Ringdichtung 20 in einer Umfangsnut 27 am Außenumfang des Getrieberades 2 aufgenommen und liegt dichtend an der Innenseite der Umfangswand 6 des Gehäusegrundkörpers 4 an.

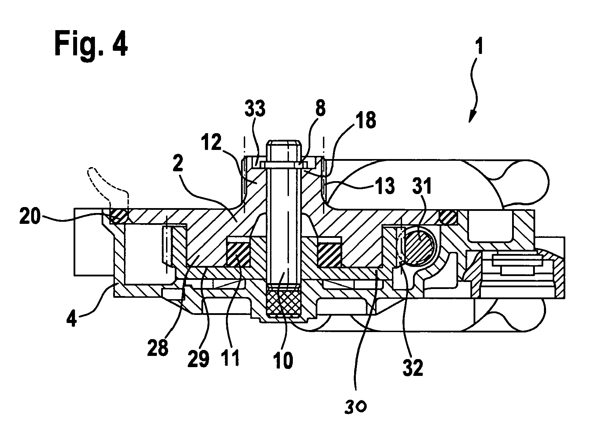

In dem Ausführungsbeispiel gemäß Fig. 4 ist in einer geschnittenen Darstellung ein alternatives Getriebe 1 gezeigt. Zu erkennen ist, das von dem Gehäusegrundkörper 4 separate Führungselement 10, welches ein als Mitnehmerrad ausgebildetes Getrieberad 2 in axialer Richtung durchsetzt. Das Getrieberad 2 weist eine Abtriebsverzahnung 13 auf. Ferner umfasst das Getrieberad 2 mehrere in axiale Richtung weisende Fortsätze 28, die in entsprechende Aufnahmetaschen 29 eines axial benachbarten Schneckenrades 30 eingreifen. In Umfangsrichtung zwischen den Fortsätzen und nicht gezeigten Taschenwänden der Aufnahmetaschen 29 befinden sich Dämpfungselemente 11 aus einem elastischen Material. Das Schneckenrad 30 bildet zusammen mit dem Getrieberad 2 ein Abtriebszahnrad. Dieses wird über eine Getriebeschnecke 31 angetrieben, die in eine am Außenumfang des Schneckenrades 30 vorgesehene Verzahnung 32 eingreift. Über die Fortsätze 28 wird das Drehmoment von dem Schneckenrad 30 auf das als Mitnehmerrad ausgebildete Getrieberad 2 übertragen.

Das einen Gehäusedeckel bildende Getrieberad 2 ist in einem radial äußeren Bereich mit Hilfe einer Ringdichtung 20 gegenüber dem Gehäusegrundkörper 4 abgedichtet.

Alternativ ist eine Ausbildung der Ringdichtung 20 als komplexes Formteil (strichlierte Darstellung) realisierbar. In der strichliert dargestellten Ausgestaltungsform eignet sich die Ringdichtung für Trockenraumanwendungen, bei denen die Ringdichtung im Bereich eines Umfangsrand einer Öffnung in einer Trennwand zwischen einem Trockenraum und einem Nassraum in einer Kraftfahrzeugtür anliegt und somit den Trockenraum gegenüber dem Nassraum abdichtet. Bei einer alternativen, nicht gezeigten, Ausführungsform kann die in axialer Richtung hervorstehende Ringdichtung auch am Getrieberad 2 festgelegt, beispielsweise aufgeklipst oder einstückig mit diesem ausgebildet werden und sich somit relativ zu der Trennwand verdrehen.

Zur Sicherung des Getrieberades 2 in axialer Richtung ist ein zentrisches Axialsicherungselement 8 vorgesehen. Dieses ist an dem Führungselement 10 festgelegt oder bildet mit diesem eine Einheit. Das Axialsicherungselement 8 liegt auf einer stirnseitig am Nabenabschnitt 12 des Getrieberades 2 ausgebildeten Schulter 18 auf. Zu erkennen ist, dass das Axialsicherungselement 8 in einer stirnseitigen Vertiefung 33 im Nabenabschnitt 12 des Getrieberades 2 aufgenommen ist.

## Patentansprüche

1. Getriebe, insbesondere Verstellgetriebe für Kraftfahrzeuganwendungen, mit mindestens einem Getrieberad (2) und mit einem einen Gehäusegrundkörper (4) aufweisenden Gehäuse, wobei das Getrieberad (2) einen Getriebedeckel (5) für das Getriebe bildet, **dadurch gekennzeichnet, dass** das Führungselement (10) feststehend ausgebildet ist und das Getrieberad (2) sowohl in radialer Richtung nach innen gegenüber dem feststehenden Führungselement (10) als auch in radialer Richtung nach außen gegenüber der feststehenden Umfangswand (6) des Gehäusegrundkörpers (4) mit Hilfe von Ringdichtungen (19, 20) abgedichtet ist, sodass ein Eindringen von Feuchtigkeit in einen Bereich zwischen dem Getrieberad (2) und dem Boden des Gehäusegrundkörpers (4) sicher verhindert wird.

2. Getriebe nach Anspruch 1,
**dadurch gekennzeichnet,**
**dass** mehr als 50%, insbesondere mehr als 60%, vorzugsweise mehr als 70%, besonders bevorzugt mehr als 80%, ganz besonders bevorzugt mehr als 90% der Flächenerstreckung des Getrieberades (2) eine Gehäuseaußenseite bilden.

3. Getriebe nach einem der Ansprüche 1 oder 2,
**dadurch gekennzeichnet,**
**dass** das Führungselement (10) einteilig mit dem Gehäusegrundkörper, insbesondere als Führungsdom, ausgebildet ist.

4. Getriebe nach Anspruch 1 oder 2,
**dadurch gekennzeichnet**, mit Axialabstand zu einem Umfangsbund (17) des Führungselements (10) ein elastischer, nach radial innen ragender Abschnitt (19) des Getrieberades (2) dichtend an dem Führungselement (10) anliegt.

5. Getriebe nach Anspruch 1,
**dadurch gekennzeichnet,**
**dass** die Ringdichtung (20) am Getrieberad (2) und/oder am Gehäusegrundkörper (4) bzw. am Führungselement (10) angeformt oder als von dem Getrieberad (2) und dem Gehäusegrundkörper (4) bzw. dem Führungselement (10) separates Bauteil ausgebildet ist.

6. Getriebe nach einem der vorhergehenden Ansprüche,
**dadurch gekennzeichnet,**
**dass** mindestens ein von dem Gehäusegrundkörper (4) und/oder von dem Führungselement (10) separates oder ein Bestandteil des Gehäusegrundkörpers (4) bzw. des Führungselementes (10) bildendes Axialsicherungselement (8) für das Getrieberad (2) vorgesehen ist.

7. Getriebe nach Anspruch 6,
**dadurch gekennzeichnet,**
**dass** das Axialsicherungselement (8) als Ringbauteil ausgebildet ist, oder dass mehrere, vorzugsweise in Umfangsrichtung beabstandete, Axialsicherungselemente (8) vorgesehen sind.

8. Getriebe nach einem der Ansprüche 6 oder 7,
**dadurch gekennzeichnet,**
**dass** das Führungselement (10), vorzugsweise gemeinsam mit dem Axialsicherungselement (8), am Gehäusegrundkörper (4) festlegbar ist.

9. Getriebe nach einem der vorhergehenden Ansprüche,
**dadurch gekennzeichnet,**
**dass** das den Gehäusedeckel (5) bildende Getrieberad (2) ein Abtriebszahnrad ist.

10. Getriebe nach Anspruch 9,
**dadurch gekennzeichnet,**
**dass** das Abtriebszahnrad als einteiliges Schneckenrad (30) oder als Kombination aus einem Schneckenrad (30) und einem mit diesem drehmomentübertragend zusammenwirkenden, den Getriebedeckel (5) bildenden Mitnehmerrad ausgebildet ist.

11. Getriebe nach einem der vorhergehenden Ansprüche,
**dadurch gekennzeichnet,**
**dass** die Ringdichtung (20) für Trockenraumanwendungen, insbesondere in einer Kraftfahrzeugtür, zur Abdichtung eines Trockenraum gegenüber einen Nassraum ausgebildet ist.

12. Antriebs-Getriebeeinheit mit einem Getriebe (1) nach einem der vorhergehenden Ansprüche, das mit einem elektrischen Antriebsmotor zusammenwirkend angeordnet ist.

## Claims

1. Transmission, in particular adjusting transmission for motor vehicle applications, having at least one transmission gear (2) and having a housing which has a housing basic body (4), wherein the transmission gear (2) forms a transmission cover (5) for the transmission, **characterized in that** the guide element (10) is formed so as to be static and the transmission gear (2) is sealed off by means of annular seals (19, 20) both in the radially inward direction with respect to the static guide element (10) and also in the radially outward direction with respect to the static circumferential wall (6) of the housing basic body (4), such that an ingress of moisture into a region between the transmission gear (2) and the base of the housing basic body (4) is reliably prevented.

2. Transmission according to Claim 1,
**characterized**
**in that** more than 50%, in particular more than 60%, preferably more than 70%, particularly preferably more than 80%, very particularly preferably more than 90% of the areal extent of the transmission gear (2) forms an outer side of the housing.

3. Transmission according to either of Claims 1 and 2,
**characterized**
**in that** the guide element (10) is formed in one piece with the housing basic body, in particular as a guide dome.

4. Transmission according to Claim 1 or 2,
**characterized**
**in that** an elastic, radially inwardly projecting portion (19) of the transmission gear (2) bears sealingly against the guide element (10) at an axial distance from a circumferential collar (17) of the guide element (10).

5. Transmission according to Claim 1,
**characterized**
**in that** the annular seal (20) is integrally formed on the transmission gear (2) and/or on the housing basic body (4) or on the guide element (10) or is formed as a component separate from the transmission gear (2) and the housing basic body (4) or the guide element (10).

6. Transmission according to one of the preceding claims,
**characterized**
**in that** at least one axial securing element (8) is provided for the transmission gear (2), which at least one axial securing element is separate from the housing basic body (4) and/or from the guide element (10) or forms a constituent part of the housing basic body (4) or of the guide element (10).

7. Transmission according to Claim 6,
**characterized**
**in that** the axial securing element (8) is formed as an annular component, or in that multiple axial securing elements (8) are provided which are preferably spaced apart in the circumferential direction.

8. Transmission according to either of Claims 6 and 7,
**characterized**
**in that** the guide element (10) can be fixed, preferably jointly with the axial securing element (8), to the housing basic body (4).

9. Transmission according to one of the preceding claims,
**characterized**
**in that** the transmission gear (2) which forms the housing cover (5) is a drive output transmission gear.

10. Transmission according to Claim 9,
**characterized**
**in that** the drive output transmission gear is formed as a single-piece worm gear (30) or as a combination of a worm gear (30) and a driver gear which interacts in a torque-transmitting fashion with said worm gear and which forms the transmission cover (5).

11. Transmission according to one of the preceding claims,
**characterized**
**in that** the annular seal (20) is designed for dry space applications, in particular in a motor vehicle door, for sealing off a dry space with respect to a wet space.

12. Drive-transmission unit having a transmission (1) according to one of the preceding claims, which transmission is arranged so as to interact with an electric drive motor.

## Revendications

1. Transmission, en particulier transmission réglable pour l'utilisation dans des véhicules automobiles, comprenant au moins une roue de transmission (2) et un boîtier présentant un corps de base de boîtier (4), la roue de transmission (2) formant un couvercle de transmission (5) pour la transmission, **caractérisée en ce qu'**un élément de guidage (10) est réalisé de manière fixe et la roue de transmission (2) est rendue étanche à la fois dans la direction radiale vers l'intérieur par rapport à l'élément de guidage fixe (10) et dans la direction radiale vers l'extérieur par rapport à la paroi périphérique fixe (6) du corps de base de boîtier (4) à l'aide de bagues d'étanchéité (19, 20), de sorte qu'une pénétration d'humidité dans une région entre la roue de transmission (2) et le fond du corps de base de boîtier (4) soit évitée de manière sûre.

2. Transmission selon la revendication 1,
**caractérisée en ce que**
plus de 50 %, en particulier plus de 60 %, de préférence plus de 70 %, particulièrement préférablement plus de 80 %, et tout particulièrement préférablement plus de 90 % de l'étendue superficielle de la roue de transmission (2) forment un côté extérieur du boîtier.

3. Transmission selon la revendication 1 ou 2,
**caractérisée en ce que**
l'élément de guidage (10) est réalisé d'une seule pièce avec le corps de base de boîtier, notamment sous forme de mandrin de guidage.

4. Transmission selon la revendication 1 ou 2,
**caractérisée en ce qu'**une portion élastique (19) de la roue de transmission (2) saillant radialement vers l'intérieur s'applique hermétiquement contre l'élément de guidage (10) à distance axiale d'un épaulement périphérique (17) de l'élément de guidage (10).

5. Transmission selon la revendication 1,
**caractérisée en ce que**
la bague d'étanchéité (20) est façonnée sur la roue de transmission (2) et/ou sur le corps de base de boîtier (4) ou sur l'élément de guidage (10) ou est réalisée sous forme de composant séparé de la roue de transmission (2) et du corps de base de boîtier (4) ou de l'élément de guidage (10).

6. Transmission selon l'une quelconque des revendications précédentes,
**caractérisée en ce**
**qu'**il est prévu au moins un élément de fixation axiale (8) pour la roue de transmission (2), séparé du corps de base de boîtier (4) et/ou de l'élément de guidage (10), ou formant un constituant du corps de base de boîtier (4) ou de l'élément de guidage (10).

7. Transmission selon la revendication 6,
**caractérisée en ce que**
l'élément de fixation axiale (8) est réalisé sous forme de composant annulaire, ou **en ce qu'**il est prévu plusieurs éléments de fixation axiale (8) de préférence espacés dans la direction périphérique.

8. Transmission selon l'une quelconque des revendications 6 ou 7,
**caractérisée en ce que**
l'élément de guidage (10), de préférence conjointement avec l'élément de fixation axiale (8), peut être fixé sur le corps de base de boîtier (4).

9. Transmission selon l'une quelconque des revendications précédentes,
**caractérisée en ce que**
la roue de transmission (2) formant le couvercle de boîtier (5) est une roue dentée de sortie.

10. Transmission selon la revendication 9,
**caractérisée en ce que**
la roue dentée de sortie est réalisée sous forme de roue à denture hélicoïdale (30) d'une seule pièce ou sous forme d'une combinaison d'une roue à denture hélicoïdale (30) et d'une roue d'entraînement coopérant avec celle-ci par transmission du couple, qui forme le couvercle de transmission (5).

11. Transmission selon l'une quelconque des revendications précédentes,
**caractérisée en ce que**
la bague d'étanchéité (20) est réalisée pour des applications dans des espaces secs, notamment dans une porte de véhicule automobile, pour réaliser l'étanchéité d'un espace sec par rapport à un espace humide.

12. Unité de transmission et d'entraînement comprenant une transmission (1) selon l'une quelconque des revendications précédentes, qui est disposée de manière à coopérer avec un moteur d'entraînement électrique.
